# EUROPEAN PATENT SPECIFICATION

(11) **EP 2 426 472 B1**
(45) Date of publication and mention of the grant of the patent: **01.11.2017**
(21) Application number: 10251539.2
(22) Date of filing: 01.09.2010
(51) Int. Cl.: G01L 3/24, G01L 1/22

(54) **Bicycle Power meter with frame mounted sensor**
Fahrrad Leistungsmesser mit rahmenmontiertem Sensor
Dynamomètre de bicyclette doté d'un capteur monté sur le cadre

(43) Date of publication of application: 07.03.2012
(73) Proprietor: Silicon Valley Micro E Corporation, San Jose CA 95119 (US)
(72) Inventor: Zhu, Shengbo, California 95123 (US); Huang, Su Shion, Washington 98004 (US)
(74) Representative: Boult Wade Tennant

(56) References cited:
- CN-Y- 201 350 957
- DE-A1- 10 336 357
- DE-A1- 10 336 357
- GB-A- 2 321 708
- JP-A- 5 080 070
- US-A- 4 418 326

## Description

### BACKGROUND OF THE INVENTION

This invention relates to bicycle power meters used to indicate the amount of power expended by the bicyclist during cycling. More particularly, this invention relates to a bicycle power meter using a frame mounted sensor for enabling the generation of electrical signals from which power can be determined.

Bicycle power meters are being increasingly used by both professional and amateur cyclists as an aid in developmental training. Several different types of bicycle power meters are available, some of which use strain gauges to measure-the force applied by the cyclist to the crankset, the bottom bracket or the rear wheel hub. While effective in providing electrical signals representative of applied force, known bicycle power meters using strain gauges are relatively expensive and somewhat difficult to install. Due to these disadvantages, bicycle power meters have not found wide acceptance in the bicycling community.

GB 2321708A discloses apparatus and a method for measuring pedalling efficiency on a bicycle. Strain transducers are attached to the bicycle frame at various different positions on the frame, optimally on the chain stay, the down tube and the seat tube immediately adjacent the bottom bracket of the bicycle frame which carries the pedal axle and cranks. A processor receives signals from the strain transducers and produces an output that is proportional to the amount of energy entering the frame, which allows the rider to monitor the efficiency of pedalling style.

DE 10336357A1 discloses a piezo-electric element mounted on a front fork of a bicycle.

CN 201350957Y discloses a bicycle with an electric auxiliary motor, in which a stress sensing device is provided to generate stress signals in response to deformation of the central spa of the bicycle frame in response to the weight of a rider. A control circuit uses the stress signal to enable use of the bicycle by a rider.

JP 5080070A discloses a strain gauge element which has a strain gauge section bonded on a beam sensing a distortion of a beam plate in an acceleration sensor device. A silicon dioxide thin film is provided on the surface of a gauge and the resin coating film is provided on the surface of the silicon dioxide thin film.

US 4,418,326 describes a strain gauge.

### SUMMARY OF THE INVENTION

The invention provides a bicycle cyclist force meter as set out in claim 1.

Embodiments of the invention provide a bicycle power meter using one or more-strain gauge sensor assemblies, which is relatively inexpensive but effective in providing electrical signals representative of applied cyclist force, which signals can be combined with speed signals to generate real time power measurements.

Embodiments of the invention provide a bicycle power meter comprising a rear bicycle frame having a first fork with a first rear fork end which is relatively compressible adjacent a region to which a rear wheel hub can be attached; and a strain gauge sensor assembly secured to the relatively compressible rear portion, the strain gauge sensor assembly having first and second stretch sensors each including a first layer having a variable resistance element mounted thereon and a second layer for supporting the first layer, the variable resistance elements of the first and second stretch sensors being ohmically interconnected to present a total resistance value representative of cyclist force.

The first and second stretch sensors are alternatively arranged with each first layer in facing relation, or with each second layer in facing relation.

The bicycle power meter may further include a bridge circuit having the first and second stretch sensors connected in a first branch and [alpha]-pair of fixed resistances -connected in a second branch; an amplifier coupled to the bridge circuit for amplifying signals representative of the total resistance value; an analog-to-digital converter coupled to the amplifier for converting the signals output from the amplifier to digital signals; a microcomputer coupled to the analog-to-digital converter for receiving the digital signals and bicycle velocity signals from an associated bicycle speedometer and converting the received signals to power signals; and a display coupled to the microcomputer for displaying the power signals to a cyclist.

The bicycle power meter can be configured as either a wired or a wireless system. In a wired system, the units are all ohmically interconnected. In a wireless system, a transmitter is coupled to the microcomputer for receiving the power signals and generating equivalent wireless signals; and a receiver coupled to the display receives the equivalent wireless signals and provides the equivalent wireless signals to the display.

In an alternative embodiment, the rear bicycle frame has a second fork with a second rear fork end which is relatively compressible adjacent a region to which a rear wheel hub can be attached; and an additional strain gauge sensor assembly is secured to the second relatively compressible rear portion. The additional strain gauge sensor assembly has third and fourth stretch sensors each including a first layer having a variable resistance element mounted thereon and a second layer for supporting the first layer, the variable resistance elements of the third and fourth stretch sensors being ohmically interconnected to present a total resistance value representative of cyclist force.

The third and fourth stretch sensors are alternatively arranged with each first layer in facing relation, or with each second layer in facing relation.

In this alternative embodiment, the third and fourth stretch sensors are connected in the second branch of the bridge circuit

The invention greatly facilitates the inclusion of a bicycle power meter with any bicycle having a relatively compressible structural portion at the end of the rear fork of the bicycle frame. The entire power meter system, or just the strain gauge sensor
assemblies, can be easily secured to the bicycle components at the point of manufacture. Similarly, the entire system can be readily secured to the bicycle at any point in the distribution chain, such as at the retailer as-an-add-on option. The bicyclist can also add the bicycle power meter system to a bicycle after purchase, at relatively low cost and effort

For a fuller understanding of the nature and advantages of the invention, reference should be made to the ensuing detailed description taken in conjunction with the accompanying drawings.

### BRIEF DESCRIPTION OF THE DRAWINGS

FIG. 1 is a perspective partial view taken from above of a bicycle rear frame illustrating the fork ends, hub, chain and strain gauge sensor assembly of a first embodiment of the invention;
FIG. 2 is an elevational view taken along lines A-A of Fig. 1 illustrating the mounting position of the strain gauge sensor assembly on the inner surface of a compressible portion of the right rear fork;
FIG. 3 is a block diagram of a bicycle power meter unit using a single strain gauge sensor assembly configured as a wired unit;
FIG. 4 is a block diagram of a bicycle power meter unit using a single strain gauge sensor assembly configured as a wireless unit;
Fig. 5 is a schematic view of a single strain gauge sensor illustrating the sensor in three different positions;
FIG. 6 is a schematic view of a first embodiment of a dual element strain gauge sensor assembly;
Fig. 7 is a schematic view of a second embodiment of a dual element strain gauge sensor assembly;
Fig. 8 is a perspective partial view taken from above of a bicycle rear frame illustrating the fork ends, hub, chain and strain gauge sensor assembly of a second embodiment of the invention having two separate strain gauge sensor assemblies;
Fig. 9 is an elevational view taken along lines B-B of Fig. 8 illustrating the mounting position of the second strain gauge sensor assembly on the inner surface of a compressible portion of the left rear fork;
Fig. 10 is a block diagram of a bicycle power meter unit using two strain gauge sensor assemblies configured as a wired unit;
Fig. 11 is a block diagram of a bicycle power meter unit using two strain gauge sensor assemblies configured as a wireless unit; and
Fig 12 is a schematic diagram illustrating variation in cyclist power with crankset angular position.

### DETAILED DESCRIPTION OF THE PREFERRED EMBODIMENTS

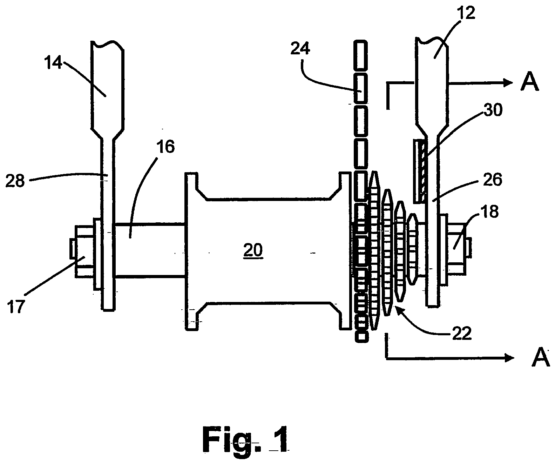

Turning now to the drawings, Fig. 1 is a perspective partial view taken from above of a bicycle rear frame illustrating the fork ends, hub, chain and strain gauge sensor assembly of a first embodiment of the invention. As seen in this Fig., a bicycle rear frame has a pair of terminating portions termed a right fork 12 and a left fork 14. Secured between forks 12, 14 by means of an axle 16 and capture nuts 17, 18 are a rear hub 20 and a sprocket assembly 22. A drive chain 24 passes around individual sprockets comprising sprocket assembly 22 in order to provide rotational movement of hub 20 is response to cycling effort by the cyclist.

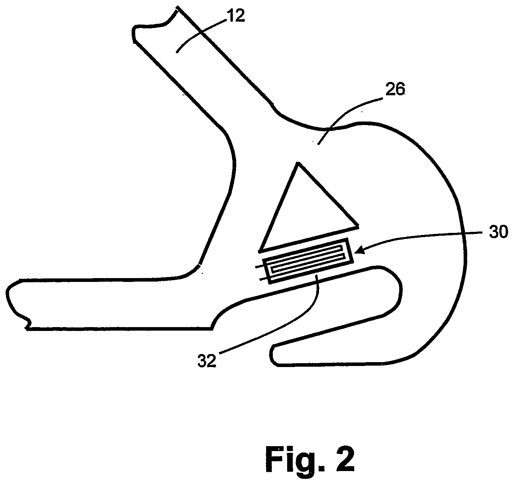

The end portion 26, 28 of each of forks 12, 14 has a thinner lateral thickness dimension than the remaining major portion of each fork 12, 14. Secured to the inner surface of end-portion 26 of right fork 12 is a strain gauge sensor assembly 30 described more fully below. As best shown in Fig. 2, strain gauge sensor assembly 30 is attached to a thin web portion 32 extending along end portion 26 of right fork 12. Web portion 32 has the mechanical property of being relatively compressible when compared to the more robust structure of right rear fork 12, so that the physical dimensions of strain gauge sensor assembly 30 can change with different force magnitudes applied to web portion 32 via chain 24, sprocket assembly 22, and axle 16.

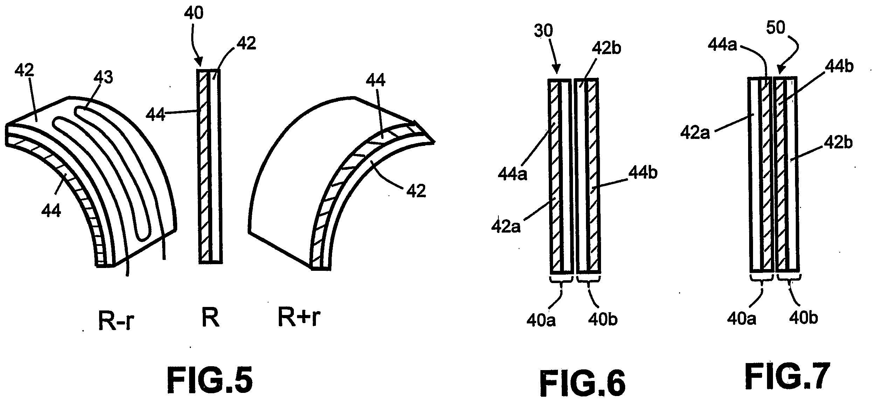

Fig. 5 illustrates a simple stretch sensor 40 having the property of an ohmic resistance which varies in a predictable amount with linear longitudinal displacement of the sensor body. Stretch sensor 40 has a first layer 42 on which a thin variable resistance element 43 is mounted, and a second base layer 44 which carries the first layer and provides additional mechanical strength for sensor 40. The resistance value of sensor 40 depends upon the longitudinal displacement of the sensor body. As shown in Fig. 5, when sensor 40 is displaced in one direction (illustrated as flexing) in a first direction, the value of the resistance increases (R+r), where R is the at rest resistance value of sensor 40 and r is the additional resistance value due to the displacement in the first direction. Similarly, when sensor 40 is displaced in the opposite direction, the value of the resistance decreases (R-r).

Fig. 6 illustrates a strain gauge sensor assembly 30 of the type incorporated into the power meter configuration shown in Figs. 1 and 2. As seen in this Fig., sensor assembly 30 comprises two two layer stretch sensors 40a, 40b having first layers 42a, 42b, and second layers 44a, 44b. Stretch sensors 40a, 40b are arranged with the first layers 42a, 42b in facing relation in an (R+r), (R-r) relation. As sensor assembly 30 is displaced by forces applied to web portion 32 of right rear fork 12, the total resistance of each stretch sensor will vary in equal and opposite directions.

Fig. 7 illustrates an alternate strain gauge sensor assembly 50 of the type incorporated into the power meter configuration shown in Figs. 1 and 2. As seen in this Fig., sensor assembly 50 comprises two two layer stretch sensors 40a, 40b having first layers 42a, 42b, and second layers 44a, 44b. Stretch sensors 40a, 40b are arranged with the second layers 44a, 44b in facing relation in an (R-r), (R+r) relation. As sensor assembly 50 is displaced by forces applied to web portion 32 of right rear fork 12, the total resistance of each stretch sensor will vary in equal and opposite directions.

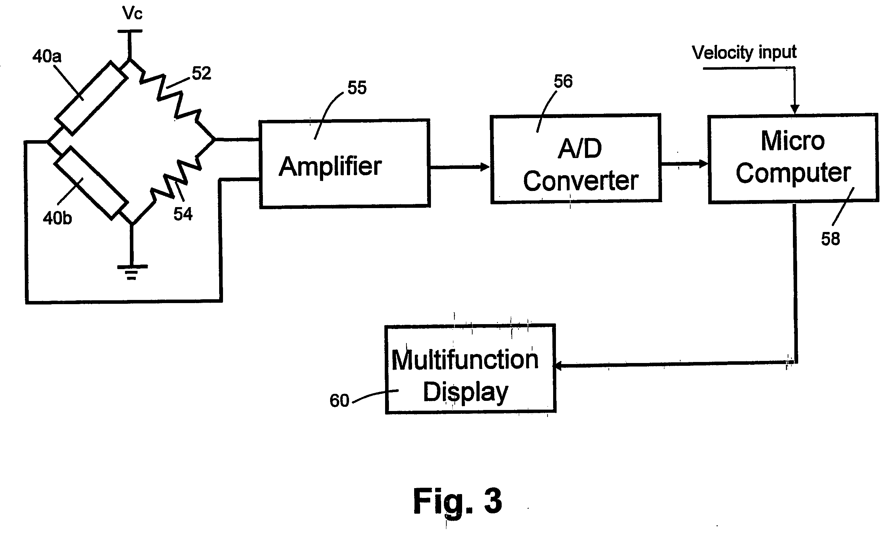

Fig. 3 is a block diagram of a bicycle power meter unit using a single strain gauge sensor assembly configured as a wired unit As seen in this Fig., the stretch sensors 40a, 40b comprising strain gauge sensor assembly 30 or 50 are connected to a pair of fixed resistances 52, 54 in a well-known Wheatstone bridge circuit configuration. The top node of the bridge is connected to a source of electrical potential Vc supplied by a battery. The bottom node of the bridge is connected to circuit ground. The right node is connected to one end of the fixed resistances 52, 54 and serves as one output terminal of the bridge circuit. The second end of fixed resistance 52 is connected to one end of stretch sensor 40a and to supply voltage Vc. The second end of fixed resistance 54 is connected to one end of stretch sensor 40b and to circuit ground. The other ends of stretch sensors 40a, 40b are connected together and serve as the other output terminal of the bridge circuit.

The bridge circuit output terminals are coupled to the input terminals of an amplifier 55, where the bridge signals are amplified. Amplifier 55 is preferably a type MAX4197 unit available from MAXIM Corporation. The amplified signals output from amplifier 55 are coupled to the input of an analog-to-digital converter 56 which converts the amplified analog signals to digital equivalent signals. The digital signals out put from analog-to-digital converter 56 are coupled to an input port of a microcomputer 58. Analog-to-digital converter 56 and microcomputer 58 are preferably combined in a type PIC 16F73 unit available from Microchip Corporation. Velocity signals from a bicycle speedmeter (not shown) are also coupled to microcomputer 58. Microcomputer 58 processes the force signals and the velocity signals using a known algorithm to provide power magnitude signals. The power magnitude signals are coupled to a multifunction display 60, which displays the current power value in readable form by the bicyclist. In the Fig. 3 embodiment the units are coupled together by ohmic wire connections.

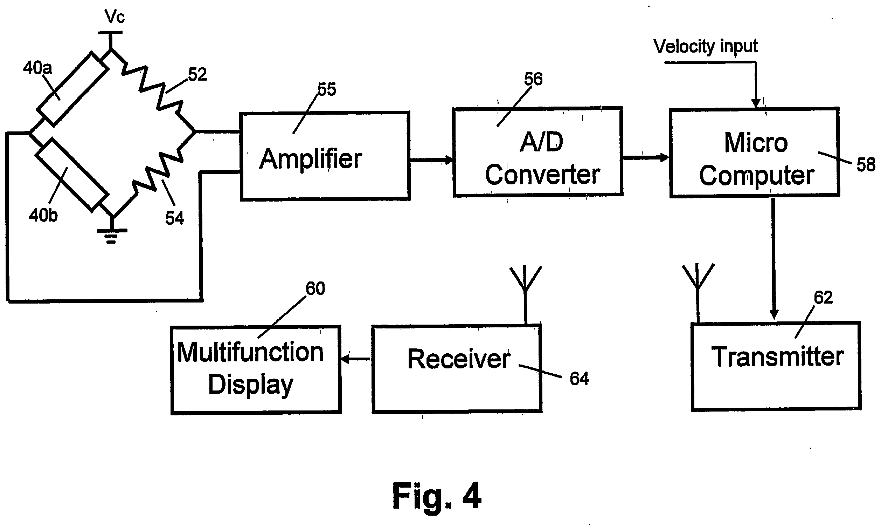

Fig. 4 is a block diagram of a bicycle power meter unit using a single strain gauge sensor assembly configured as a wireless unit. In this Fig., elements corresponding to the same elements in the system of Fig. 3 are designated with the same reference numerals. In the Fig. 4 system, the processed power signals are coupled to the input of an r.f transmitter 62 located near the sensor assembly 30 (50). Transmitter 62 transmits the power signals to a receiver 64 located near the multifunction display 60, which supplies these signals to the multifunction display 60.

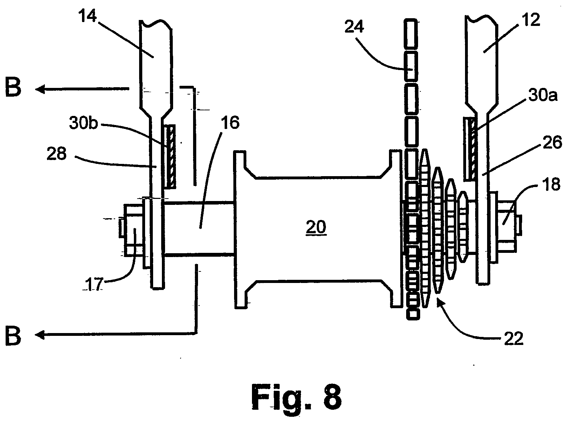

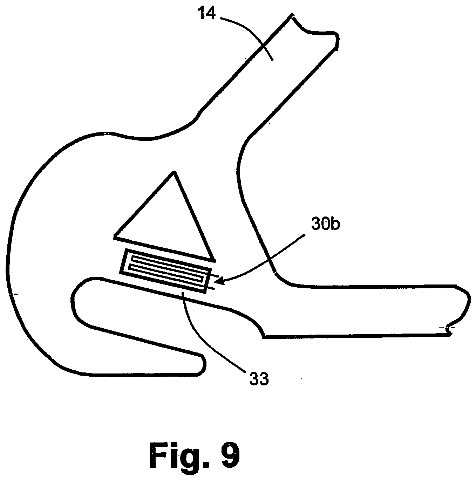

Fig. 8 is a perspective partial view taken from above of a bicycle rear frame illustrating the fork ends, hub, chain and strain gauge sensor assembly of a second embodiment of the invention having two separate strain gauge sensor assemblies. In this Fig., elements corresponding to the same elements shown in Fig. 1 are designated with the same reference numerals, with the exception of sensor assembly 30 which is designated with reference 30a. Secured to the inner surface of end portion 28 of left fork 14 is a second strain gauge sensor assembly 30b. Sensor assembly 30b has the same structure and function as sensor assembly 30 described above. As best shown in Fig. 9, strain gauge sensor assembly 30b is attached to a thin web portion 33 extending along end portion 28 of left fork 14. Web portion 33 has the mechanical property of being relatively compressible when compared to the more robust structure of left rear fork 14, so that the physical dimensions of strain gauge sensor assembly 30b can change with different force magnitudes applied to web portion 33 via chain 24, sprocket assembly 22, and axle 16.

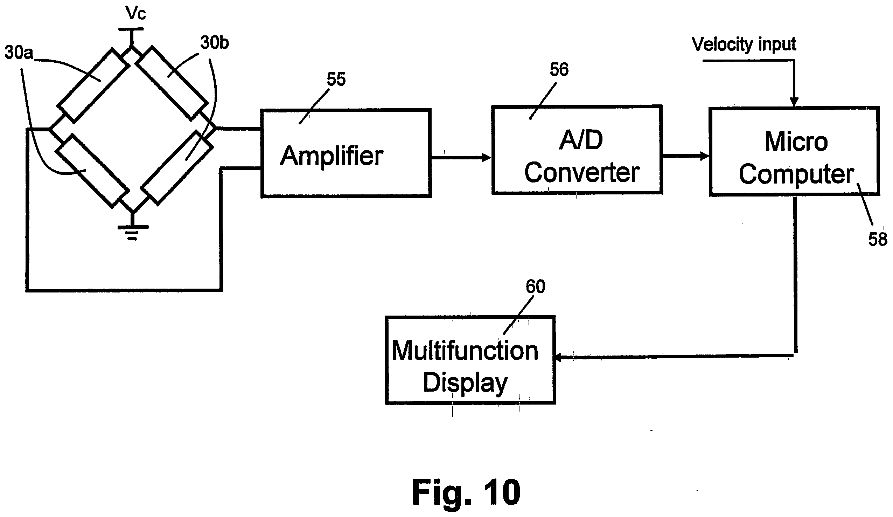

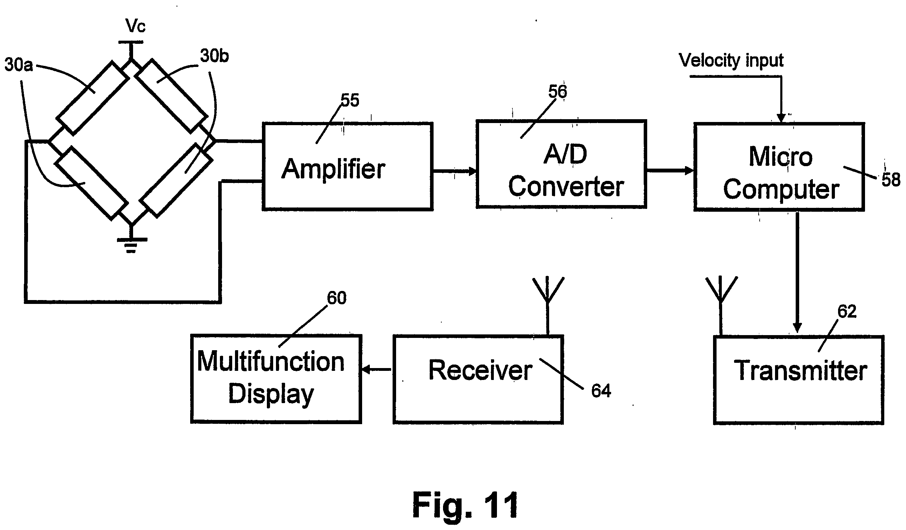

Fig. 10 is a block diagram of a bicycle power meter unit using two strain gauge sensor assemblies 30a, 30b configured as a wired unit. Fig. 11 is a block diagram of a bicycle power meter unit using two strain gauge sensor assemblies 30a, 30b configured as a wireless unit. The principal elements shown in each Fig. are essentially the same as those shown in Figs. 3 and 4, with the exception of the configuration of the bridge circuit In both Figs. 10 and 11, the fixed resistances 52, 54 are replaced by the individual stretch sensors 40a, 40b comprising the second sensor assembly 30b, with electrical connections as shown. Thus, the bridge comprises four individual variable resistance stretch sensors 40.

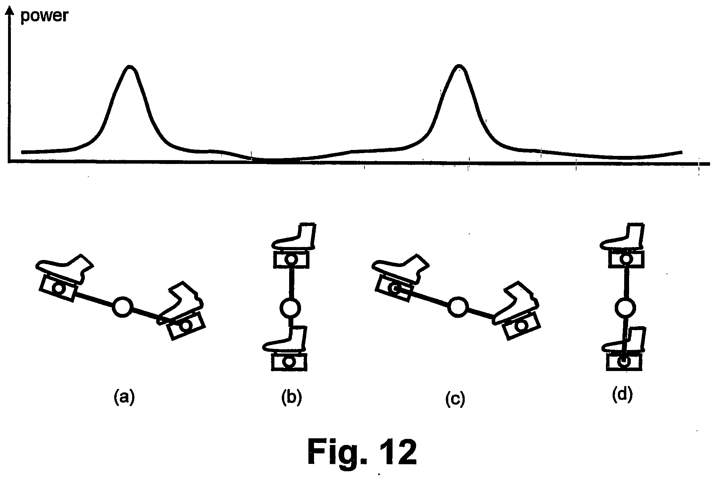

In use, as the cyclist applies force to the bicycle pedals, the magnitude of the force is monitored by the bridge circuit. and converted to visible power display signals for the bicyclist to observe. Fig. 12 is a schematic diagram illustrating variation in cyclist power with crankset angular position. In position (a) the pedals are essentially horizontal and the cyclist is applying maximum force with the forward pedal. In position (b) the pedals are essentially vertical and the cyclist is applying minimum force. In position (c) the-pedals are again essentially horizontal and the cyclist is applying maximum force with the forward pedal; while in position (d) the pedals are again-essentially vertical and the cyclist is applying minimum force.

As will now be apparent, bicycle power meters fabricated according to the teachings of the invention offer cost and ease of installation advantages over known bicycle power meters using strain gauges. Firstly, the strain gauges are relatively simple to install on any bicycle frame having the relatively compressible thin web portion adjacent the rear hub. This installation can be done at the bicycle factory or elsewhere in the chain of commerce (e.g., by the retailer or the user-bicyclist). In addition, bicycle power meters fabricated according to the teachings of the invention can be configured in either a wired or a wireless mode, which affords great flexibility in the installation process. Further, by employing the two layer dual strain gauge assemblies, greater sensitivity is achieved over single strain gauge designs. Lastly, by employing the four strain gauge configuration shown in Figs. 8-11, a high level of insensitivity to temperature variations encountered during cycling can be achieved.

## Claims

1. A bicycle cyclist force meter comprising:
a rear bicycle frame having a first fork (12) with a relatively compressible thin web portion (32) extending along a first fork end portion (26) adjacent a region to which a rear wheel hub (20) can be attached; and
a strain gauge sensor (30) assembly secured to said first relatively compressible thin web portion (32), said strain gauge sensor assembly (30) having first and second stretch sensors (40a, 40b) layered on each other each including a first layer (42a, 42b) having a variable resistance element (43) mounted thereon and a second layer (44a, 44b) for supporting said first layer (42a, 42b),
the first and second stretch sensors (40a, 40b) being arranged with either the first layers (42a, 42b) or the second layers (44a,44b) facing each other,
the variable resistance elements (43) of said first and second stretch sensors (40a, 40b) being ohmically interconnected to present a total resistance value representative of cyclist force.

2. The cyclist force meter of claim 1 further including a bridge circuit having said first and second stretch sensors (40a, 40b) connected in a first branch and a pair of fixed resistances (52, 54) connected in a second branch; an amplifier (55) coupled to said bridge circuit for amplifying signals representative of said total resistance value; an analog-to-digital convertor (56) coupled to said amplifier (55) for converting the signals output from said amplifier to digital signals; a microcomputer (53) coupled to said analog-to-digital converter (56) for receiving said digital signals and bicycle velocity signals from an associated bicycle speedometer and converting the received signals to power signals; and a display (60) coupled to said microcomputer (58) for displaying the power signals to a cyclist.

3. The bicycle cyclist force meter of claim 2 further including a transmitter (62) coupled to said microcomputer (53) for receiving said power signals and generating equivalent wireless signals; and a receiver (64) having an output coupled to said display (60) for receiving said equivalent wireless signals and providing said equivalent wireless signals to said display (60).

4. The bicycle cyclist force meter of any preceding claim wherein said rear bicycle frame has a second fork (14) with a relatively compressible second thin web portion (33) extending along a second rear fork end portion (28) adjacent a region to which a rear wheel hub (20) can be attached; and an additional strain gauge sensor assembly (30b) secured to said second thin web portion (33), said additional strain gauge sensor assembly having third and fourth stretch sensors each including a first layer having a variable resistance element mounted thereon and a second layer for supporting said first layer, the variable resistance elements of said third and fourth stretch sensors being ohmically interconnected to present a total resistance value representative of cyclist force.

## Patentansprüche

1. Fahrrad-Radfahrerkraftmesser, umfassend:
einen hinteren Fahrradrahmen, welcher eine erste Gabel (12) mit einem relativ komprimierbaren dünnen Stegabschnitt (32) aufweist, welcher sich benachbart zu einem Bereich, an welchen eine Hinterradnabe (20) angebracht werden kann, entlang eines ersten Gabelendabschnitts (26) erstreckt; und
eine Dehnungsmesssensoranordnung (30), welche an dem ersten relativ komprimierbaren dünnen Stegabschnitt (32) gesichert ist, wobei die Dehnungsmesssensoranordnung (30) einen ersten und einen zweiten Dehnsensor (40a, 40b) aufweist, welche aufeinander geschichtet sind, welche jeweils eine erste Schicht (42a, 42b), welche ein daran montiertes variables Widerstandselement (43) aufweist, und eine zweite Schicht (44a, 44b) zum Halten der ersten Schicht (42a, 42b) umfassen,
wobei der erste und der zweite Dehnsensor (40a, 40b) entweder mit den ersten Schichten (42a, 42b) oder den zweiten Schichten (44a, 44b) einander zugewandt angeordnet sind,
wobei die variablen Widerstandselemente (43) des ersten und des zweiten Dehnsensors (40a, 40b) ohmisch miteinander verbunden sind, um einen eine Radfahrerkraft repräsentierenden Gesamtwiderstandswert darzustellen.

2. Fahrrad-Radfahrerkraftmesser nach Anspruch 1, ferner umfassend eine Brückenschaltung, welche in einem ersten Zweig verbunden den ersten und den zweiten Dehnsensor (40a, 40b) und in einem zweiten Zweig verbunden ein Paar von Festwiderständen (52, 54) aufweist; einen mit der Brückenschaltung gekoppelten Verstärker (55) zum Verstärken von den Gesamtwiderstandswert repräsentierenden Signalen; einen mit dem Verstärker (55) gekoppelten Analog-Digital-Wandler (56) zum Umwandeln der von dem Verstärker ausgegebenen Signale in digitale Signale; einen mit dem Analog-Digital-Wandler (56) gekoppelten Mikrocomputer (53) zum Empfangen der digitalen Signale und von Fahrradgeschwindigkeitssignalen von einem zugeordneten Fahrradgeschwindigkeitsmesser und zum Umwandeln der empfangenen Signale in Leistungssignale; und eine mit dem Mikrocomputer (58) gekoppelte Anzeige (60), um die Leistungssignale einem Radfahrer anzuzeigen.

3. Fahrrad-Radfahrerkraftmesser nach Anspruch 2, ferner umfassend einen mit dem Mikrocomputer (53) gekoppelten Transmitter (62) zum Empfangen der Leistungssignale und zum Erzeugen eines äquivalenten drahtlosen Signals; und einen eine mit der Anzeige (60) gekoppelte Ausgabe aufweisenden Empfänger (64), um die äquivalenten drahtlosen Signale zu empfangen und um die äquivalenten drahtlosen Signale der Anzeige (60) bereitzustellen.

4. Fahrrad-Radfahrerkraftmesser nach einem der vorhergehenden Ansprüche, wobei der hintere Fahrradrahmen aufweist: eine zweite Gabel (14) mit einem relativ komprimierbaren zweiten dünnen Stegabschnitt (33), welcher sich benachbart zu einem Bereich, an welchen eine Hinterradnabe (20) angebracht werden kann, entlang eines zweiten hinteren Gabelendabschnitts (28) erstreckt; und eine zusätzliche Dehnungsmesssensoranordnung (30b), welche an dem zweiten dünnen Stegabschnitt (33) gesichert ist, wobei die zusätzliche Dehnungsmesssensoranordnung einen dritten und einen vierten Dehnsensor aufweist, welche jeweils eine erste Schicht, welche ein daran montiertes variables Widerstandselement aufweist, und eine zweite Schicht zum Halten der ersten Schicht umfassen, wobei die variablen Widerstandselemente des dritten und des vierten Dehnsensors ohmisch miteinander verbunden sind, um einen eine Radfahrerkraft repräsentierenden Gesamtwiderstandswert darzustellen.

## Revendications

1. Capteur de force de cycliste pour bicyclette comprenant :
un cadre de bicyclette arrière comportant une première fourche (12) comportant une partie âme mince relativement compressible (32) s'étendant le long d'une première partie d'extrémité de fourche (26) adjacente à une région à laquelle un moyeu de roue arrière (20) peut être fixé ; et
un ensemble capteur à jauge de contrainte (30) fixé à ladite première partie âme mince relativement compressible (32), ledit ensemble capteur à jauge de contrainte (30) comportant des premier et deuxième capteurs d'extension (40a, 40b) superposés, chacun comprenant une première couche (42a, 42b) comportant un élément à résistance variable (43) monté sur lui et une deuxième couche (44a, 44b) pour supporter ladite première couche (42a, 42b),
les premier et deuxième capteurs d'extension (40a, 40b) étant agencés avec soit les premières couches (42a, 42b), soit les deuxièmes couches (44a, 44b) se faisant face,
les éléments à résistance variable (43) desdits premier et deuxième capteurs d'extension (40a, 40b) étant interconnectés ohmiquement pour présenter une valeur de résistance totale représentative de la force du cycliste.

2. Capteur de force de cycliste selon la revendication 1, comprenant, en outre, un circuit en pont comportant lesdits premier et deuxième capteurs d'extension (40a, 40b) connectés dans une première ramification et une paire de résistances fixes (52, 54) connectés dans une deuxième ramification ; un amplificateur (55) accouplé audit circuit en pont pour amplifier des signaux représentatifs de ladite valeur de résistance totale ; un convertisseur analogique-numérique (56) accouplé audit amplificateur (55) pour convertir les signaux sortis depuis ledit amplificateur en signaux numériques ; un micro-ordinateur (53) accouplé audit convertisseur analogique-numérique (56) pour recevoir lesdits signaux numériques et des signaux de vitesse de bicyclette depuis un compteur de vitesse de bicyclette associé et convertir les signaux reçus en signaux de puissance ; et un affichage (60) accouplé audit micro-ordinateur (53) afin d'afficher les signaux de puissance pour un cycliste.

3. Capteur de force de cycliste pour bicyclette selon la revendication 2 comprenant, en outre, un transmetteur (62) accouplé audit micro-ordinateur (53) pour recevoir lesdits signaux de puissance et produire des signaux sans fil équivalents ; et un récepteur (64) comportant une sortie accouplée audit affichage (60) pour recevoir lesdits signaux sans fil équivalents et fournir lesdits signaux sans fil équivalents audit affichage (60).

4. Capteur de force de cycliste pour bicyclette selon l'une quelconque des revendications précédentes, dans lequel ledit cadre de bicyclette arrière comporte une deuxième fourche (14) comportant une deuxième partie âme mince relativement compressible (33) s'étendant le long d'une deuxième partie d'extrémité de fourche arrière (28) adjacente à une région à laquelle un moyeu de roue arrière (20) peut être fixé ; et un ensemble capteur à jauge de contrainte supplémentaire (30b) fixé à ladite deuxième partie âme mince (33), ledit ensemble capteur à jauge de contrainte supplémentaire comportant des troisième et quatrième capteurs d'extension, chacun comprenant une première couche comportant un élément à résistance variable monté sur lui et une deuxième couche pour supporter ladite première couche, les éléments à résistance variable desdits troisième et quatrième capteurs d'extension étant interconnectés ohmiquement pour présenter une valeur de résistance totale représentative de la force du cycliste.
